# EUROPEAN PATENT APPLICATION

(11) **EP 1 382 648 A1**
(43) Date of publication of application: **21.01.2004**
(21) Application number: 02077904.7
(22) Date of filing: 17.07.2002
(51) Int. Cl.: C09D 167/08

(54) **Drier for alkyd based coating**

(71) Applicant: Universiteit Leiden, 2312 AV Leiden (NL)
(72) Inventor: van Gorkum, Remy, 2334 EZ Leiden (NL); Bouwman, Elisabeth, 2215 TP Voorhout (NL); Reedijk, Jan, 2334 CD Leiden (NL)
(74) Representative: Prins, Adrianus Willem

(57) **Abstract**

The invention relates to a drier for an oxidatively air-drying alkyd based coating composition which is not based on cobalt and therefore provides an environmentally and less toxic alternative to conventional driers for such coating compositions. Furthermore, the drier has anti-skinning properties making it possible to omit conventional additives used for this purpose from an oxidatively air-drying alkyd based coating composition.

## Description

The invention relates to a drier for an alkyd based coating, to the use of said drier in an alkyd based coating, and to a coating composition comprising said drier.

Air-drying coating compositions, such as paints, are mostly based on unsaturated resins, dissolved in an organic or aqueous medium. The resin typically is a liquid product. When the composition is applied to a substrate, the unsaturated resin undergoes a chemical conversion in which it is polymerized or cross-linked. As a result, the resin is transformed into a solid material and a solid film, the coating, is formed. The chemical conversion of the resin may be initiated or catalyzed by oxygen (from the air), UV (light), heat and/or a reagent present in the coating composition.

It has long been known that metal salts accelerate the drying of alkyd based oxidatively drying coatings. A wide range of metals and carboxylic acids is used. Metals are for example V, Mn, Co, Ce and Pb. Acids can be 2-ethyl hexanoic acid, isononanic acid, heptanoic acid, versatic acid and linseed oil fatty acids. The metal salts of the aforementioned metals and acids function mainly as primary driers, which means that they mostly effect the surface drying of the coating. To accomplish a thorough drying of the whole coating layer mixtures of primary and secondary driers are used, secondary driers being metal salts of for example Li, K, Na, Mg, Ba, Sr, Ca, and Zn. More examples of used driers may be found in for example: J.H. Bieleman (ed.) "additives for coatings", chapter 7.

Drying agents or "driers" are generally metal containing compounds which are added to unsaturated oils and/or binders (the oxidatively drying components in alkyd based coatings) to reduce their drying times, the coating being "dry" when it has gone from a liquid phase to a solid phase. This occurs trough oxidative radical cross-linking of the oils or binders to form 3 dimensional polymer networks. The oxidative cross-linking of alkyd based binder compounds proceeds according to scheme 1.

### A. Initiation

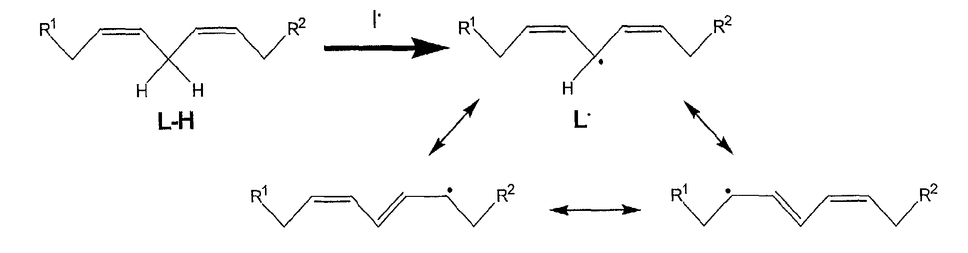

| Scheme 1. Oxidative drying of alkyd based coatings. | |
|---|---|
| B. Propagation | C. Crosslinking |
| L· + O₂ → LOO· + LH → LOOH + L· | L· + L· → L-L |
| LOOH+M²⁺ → LO·+⁻OH+M³⁺ | LO·+ L· → L-O-L |
| LOOH + M³⁺→ LOO· + H⁺ + M²⁺ | LOO· + L·→ L-O-O-L |
| **L-H** represents the reactive part of an oil or binder component of a coating. **I** Is a radical initiator. **L**· is a binder compound radical. **LOO**· is a hydroperoxy radical | |

Primary driers based on cobalt are the most widely used because of their good performance at ambient temperature. However, because of the suspected carcinogenicity of cobalt salts it is desired to find alternative drier compounds that show a drying performance which is comparable or better than that of cobalt driers and can replace cobalt based driers completely in alkyd based oxidatively air-drying coatings. Some primary driers based on a non-cobalt metal salt are already known and used as a replacement for cobalt. These driers are most often based on manganese, but none show a comparable drying activity to cobalt salts even in the presence of accelerating compounds, as for example 1,10-phenantroline or α,α-dipyridine (see US-A-2,565,897 or US-A-2,526,718 or DE-A-26 58 694 for examples). Thus, there exists a need for improved driers for this type of coating, which driers are not based on cobalt.

The present invention provides a class of novel driers for oxidatively air-drying alkyd based coatings, which show a drying activity comparable to cobalt based driers. The activity of said non-cobalt based coordination compounds can be even further improved by the addition of chelating diamines to these coordination compounds.

The invention thus relates to a drier for an oxidatively air-drying alkyd based coating having the formula (I)

[(Mⁿ⁺⁾(B₁-)ₚ(B₂-)_{q}(B₃-)ᵣ(L)ₓ](A-)_{y} (I)

wherein
M represents a metal cation chosen from the group of V, Mn, Fe, Ni, Cu and Ce;
n is any integer number between 1-4, preferably 2 or 3;
p is an integer number between 1-3, preferably 2 or 3;
q is an integer number between 0-2;
r is an integer number between 0-2;
x is an integer number between 0-3, preferably 1;
y is an integer number between 0-3;
A is an anion chosen from the group of perchlorates, nitrates, sulfates, phosphates, borates, oxalates, naphthenates and carboxylates;
L is a chelating diamine; and
B₁, B₂ and B₃ are the same or different and chosen from the group of mononegative chelating ligands having the formula (II) 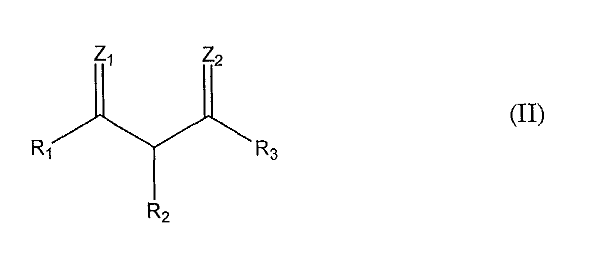 wherein
R₁ and R₂ and R₃ are the same or different and chosen from the group of H, a C₁-C₄ linear or branched aliphatic alkyl group, a nitro group, a halogen, CX₃ wherein X is a halogen, or an aromatic ring optionally containing one or more heteroatoms and optionally containing one or more substituents, wherein R₁ and R₂ and/or R₂ and R₃ or both may be connected to form an aliphatic or aromatic carbon ring of C₅ or C₆; and
Z₁ and Z₂ are either both oxygen or substituted nitrogen, or a combination thereof.

When traditional driers are added to oxidatively air-drying alkyd based coatings, they always need to be combined with anti-skinning agents to prevent skin formation on the coating mixture during storage. Anti-skinning agents that are commonly used are oximes (for example MEKO, methyl ethyl ketone oxime). These agents are often toxic and thus it is desired to omit these agents from coating mixtures. There are some other, less toxic, anti-skinning agents known (for example the combination of 1,3-diketones with imidazoles or pyrazoles, see patent WO 00/11090). It was surprisingly found however that the compounds described in the present invention show an unexpected anti-skinning behaviour that is superior to that of other anti-skinning agents. As a result, the use of an additional anti-skinning agent is not necessary when a drier in accordance with the invention is used.

As mentioned, a drier according to the invention is a coordination compound containing a metal chosen from the group of vanadium, manganese, iron, nickel, copper and cerium. The valence of the metal may be 1, 2, 3, or 4. Preferably, manganese or iron having a valence of 3 is used.

The general structure of B₁, B₂ and B₃ is a beta-diketonate or a derivative of a beta-diketonate according to the general structure shown in (II). It is preferred that B₁, B₂ and B₃ are the same.

Preferred β-diketonates are those in which R₂ = H and R₁ and R₃ are the same and are chosen from the group of alkyl and aryl groups. Examples of preferred substituted nitrogens used as substitutent Z are: arylamines, imines, alkylamines, or imine, preferably arylamine. In the context of the invention, an alkyl group is a straight or branched, saturated alkyl chain having from 1 to 12, preferably 1 to 6 carbon atoms. An aryl group is an optionally substituted aromatic ring or ring system having 5, 6, 7, or 12 carbon atoms, such as phenyl, naphtyl and the like.

In a preferred embodiment, B₁ is dibenzoylmethane or 2,4-pentanedionate (acac-), p is 3 and q and r are 0.

The nature of the anion A- is not critical. Preferred anions are carboxylates such as 2-ethyl hexanoate.

As mentioned, L is a chelating diamine that is preferably present to enhance the activity of the drier compounds even further. The value of x accordingly is preferably 1, 2 or 3. Examples of suitable chelating diamines are bipyridine, phenantroline, 2-aminomethylpyridine, ethylenediamine, tetramethylethylenediamine, diaminopropane, and 1,2-diaminocyclohexane.

An important thing to note about a drier according to the invention is that p in formula (I) is at least 1, that is the drier needs to contain at least one beta-diketonate moiety as described according to (II).

The compounds described under (II) can be fully prepared before adding it to a coating composition or the compounds can be formed *in situ* by adding the appropriate metal salt Mⁿ⁺(A⁻)_{y} to a coating composition and then adding the desired components B₁, B₂, B₃ and L. In this respect, it is to be noted that the number of ligands coordinated to the metal cation M in principle depends on the valence of the metal. However, in accordance with the invention, additional ligands may be present. For instance, very good results have been obtained using Mn(acac)₃ together with two or three equivalents bipyridine as L. Thus, depending on the circumstances, a drier according to the invention may be one single metal complex or a mixture.

The presented compounds show drying activity which is comparable to traditional cobalt salts, even when there is no diamine L present. Addition of L improves the activity even further. The presented compounds also show anti-skinning behaviour in coating mixtures thereby making it possible to omit toxic antiskinning agents from the coating mixture in which the described compounds are used as a drier. The presented compounds thus function as a drier as well as an anti-skinning agent. The anti-skinning activity of the presented compounds is far superior to other non-oxime anti-skinning agents, which are for example described in patent WO/11090. Conventional cobalt and manganese driers are not active as anti-skinning agents, when these are used as driers in a coating mixture, toxic anti-skinning agents need to be added separately.

A drier according to the invention can be added to a coating composition dissolved in for example toluene, or any other solvent that is able to dissolve the complex and is miscible with the coating composition. Another method to form the compound as described under (II) is by adding to the coating composition a metal salt, preferably a manganese salt, for example manganese 2-ethylhexanoate, and then adding up to three molar equivalents (based on the metal added) of 2,4-pentanedione (Hacac) to the mixture. To the composition can also, but not necessarily, be added 1-3 molar equivalents (based on metal) of a chelating diamine, preferably bipyridine, to shorten the drying time even further. The drier will generally be present in the coating composition in an amount ranging from 0.01 to 0.2 wt.%, preferably from 0.06 to 0.1 wt.%, based on the weight of the composition.

The coating compositions may comprise any conventional ingredients, such as resins, pigments, solvents, and additives. The term additives refers to auxiliary products which, even in small quantities, improve the technical properties of a coating composition. Typical examples of additives include defoaming agents, thickeners, solvents, dispersants, driers and the like.

Examples of resins that may be present include alkyd resins, epoxy-esters, urethane-alkyds and further modified oils. The resin may be present in an amount of between 10 and 50 wt.%, based on the weight of the (liquid) coating composition. Air drying alkyd resins are esters from drying oils, such as linseed oil, soybean oil, tungoil, and other oils having unsaturated groups in there alkyl chain.

The pigment may be inorganic or organic in nature. Typical inorganic pigments are for instance titanium dioxide, iron-oxide red, iron-oxide yellow, and iron-oxide black. Typical organic pigments are for example naphtol red, phtalocyanine blue, and phtalocyanine green. The pigment content may vary between 0 and 80 wt.%, based on the total weight of the (liquid) coating composition.

The solvent will usually be an organic solvent. Examples of solvents that are typically used in coating compositions are mineral spirits, known as white spirit, as well as xylene, glycol ethers, ketones, esters and mixtures thereof. Thickeners are usually polyamid derivatives, bentonites and/or silicates.

As catalyst for promoting the polymerization or cross-linking (curing) during the film forming process after the liquid coating composition has been applied to a substrate, metallic soaps that are soluble in the used binders can be employed. These catalysts are often referred to as driers. Examples of driers include cobalt octoate, strontium octoate, copper octoate, zirconium octoate, zinc octoate and calcium octoate. These catalysts are usually used in the form of combinations of two, three or four different metallic soaps. Typical amounts wherein the catalysts are used range between 0.1 and 5 wt.%, based on the total weight of the (liquid) coating composition.

Other ingredients that may be present in the coating composition depend on the envisaged application of the composition. Examples are antisettling agents, anti-sagging agents, de-airing agents, and the like. The sum of the amounts of the various additives will usually not exceed 5 wt.%, based on the total weight of the (liquid) coating composition. Based on the above and his general expertise, such as it is represented in e.g. The Proceedings of the FATIPEC Congress Interlaken 1998, page A-285, published by P. Zehnder AG, Zurich, Switzerland, or in Resin Book, edition of 1996, AKZO Nobel Resins, Bergen Op Zoom, The Netherlands, the skilled person will be able to formulate a coating composition appropriate for a given application.

The following examples will illustrate the use of the invention further. The use of the invention is not limited by the examples.

### Examples

### Starting materials:

Commercially available cobalt and manganese 2-ethylhexanoate drier 10 wt.% in C₁₀-C₁₂ paraffin/naphtenic solvents (Nuodex Co 10, Nuodex Mn 10), combination driers Co-Ca-Sr (Nuodex Combi BSR), Mn-Ca-Zr (Nuodex 99/366), and Mn-bipyridyl drier (Nuodex FS 530) were supplied by Sasol Servo B.V. (Delden, the Netherlands).

Technical ethyl linoleate (EL, 65-70%, remainder ethyl oleate) was obtained from Fluka (Bornhem, Belgium). Bipyridine was obtained from Acros organics. Methyl ethyl ketone oxime (Meko), Exkin 2 was supplied by SASOL Servo B.V. (Delden, The Netherlands).

[Mn(acac)₃] was prepared according to literature methods (J.Chem.Soc.Dalton Trans., 1984, 669-670; Inorg.Synth, 7, 183-184) and is also commercially available from Aldrich. 2,4-pentanedione (99%) was purchased from Acros organics and used as received.

All experiments and measurements were performed at room temperature.

The drying time was determined by B.K. drying (wet film thickness: 76 µm; ASTM D5895-96) and a Braive recorder (wet film thickness: 76 µ m; ASTM D5895-96). After the application of the film on a glass strip (B.K. recorder: 69 × 2.5 cm; Braive recorder: 30.5 × 2.5 cm) a vertical blunt needle is positioned in to the freshly applied film by a 5 g load and then dragged through the drying paint in a direction parallel to the length of the coat.

The three stages in the Braive recorder experiment are described as stage a: the paint flows together (leveling), i.e. the paint is wet; stage b: a line is visible, the paint begins to polymerize, this is the basis trace; stage c: this is the so-called "surface dry time". This condition is reached when the drying reactions have proceeded sufficiently. At this condition the film is not displaced anymore.

The drying was further established by hand according to ASTM D1640 (wet film thickness: 60 µm).

For the determination of the "surface dry time" the cotton fiber test method was applied. The through drying state was determined by the use of a "mechanical thumb" device.

The König hardness of the films was assessed by using the pendulum damping test according to DIN53157. A glass panel was coated with a 60 µm wet film, kept under conditions of 23°C and 50% RH and the hardness development in time was monitored with a König pendulum. The oscillation time measured to reduce the deflection from initial 6 ° to 3 ° is given in seconds.

### Example 1

In this example, the drying activity was measured using a model compound for the binder component in alkyd paint: ethyl linoleate (EL).

In a typical oxidative cross-linking experiment, 500 µl (1 mmol) of EL (70%) were mixed with approximately 15 µl of a commercial drying agent dissolved in toluene (0.169 M for Co-Nuodex; 0.182 M for Mn-Nuodex) or [Mn(acac)₃] dissolved in 100 µl toluene resulting in a molar ratio of EL/drier ≈ 375/1. Al trace peroxides were removed from EL just before use by eluting it over a basic Al₂O₃ column. 200 µl of the mixture was spread in a thin layer on the sample holder (5.5 cm² ≈ 0.3 mm layer thickness) to undergo time-resolved infrared measurements.

FT-IR spectra were obtained on a Bio-Rad FTS-60A infrared spectrometer equipped with a Specac ATR device (ZnSe crystal, angle of incidence 45°), using the reflectance technique (4000-600 cm⁻¹, resolution 2 cm⁻¹).

For the time-resolved measurements the kinetic mode of the software Win IR pro has been used. Every 5 minutes an absorption spectrum was recorded automatically in an attenuated total reflection (ATR) mode and an integration of the peak at 3010 cm⁻¹ (between 2992 cm⁻¹ and 3025 cm⁻¹) is performed. As result an output file is obtained, containing a table of the integrals of this peak at different times. This file can be further processed with standard spreadsheet programs. This data results in pseudo-first order reaction rates for the oxidation of EL (see Prog. Org. Coat. 44, 243-248 for more details). See table 1 for results.

**Table 1**

| FTIR-obtained data for the oxidation of EL with different catalysts | | | | | | |
|---|---|---|---|---|---|---|
| | Mn(acac)₃ | | Nuodex Co | | Nuodex Mn | |
| #eq bpy | ind time | rate | ind time | Rate | ind time | Rate |
| 0 eq | 30 | 14 | ≥ 75 | 40 | >400 | 14 |
| 1 eq | 30 | 42 | | | | |
| 2 eq | 30 | 59 | | | | |
| 3 eq | 30 | 79 | | | | |
| In all measurements, EL was purified over Al₂O₃ before use. Manganese/EL = 0.03wt% All data are averages of multiple measurements. Induction time is in minutes, rate is in 10⁻⁴min⁻¹. | | | | | | |

In this example the drying activity was measured in a commercial wood preservative based on a long-oil alkyd (72% oil length, tall oil, 6% pigments) supplied by Dyrup, Denmark.

A cobalt based combination drier: Co-Ca-Sr (Nuodex Combi BSR), a manganese based combination drier: Mn-Ca-Zr (Nuodex 99/366), a manganese-bipyridyl drier (Nuodex FS 530) and Mn(acac)3 solved in Hacac are tested on drying and hardness.

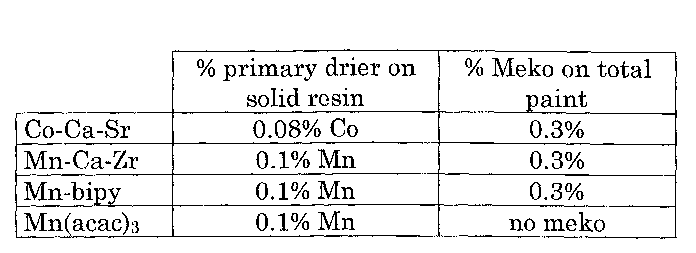

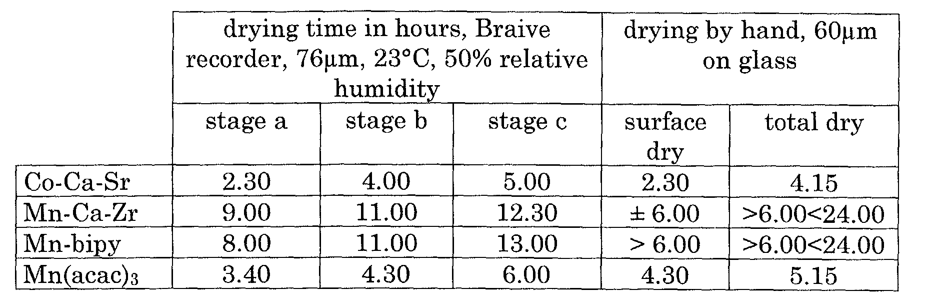

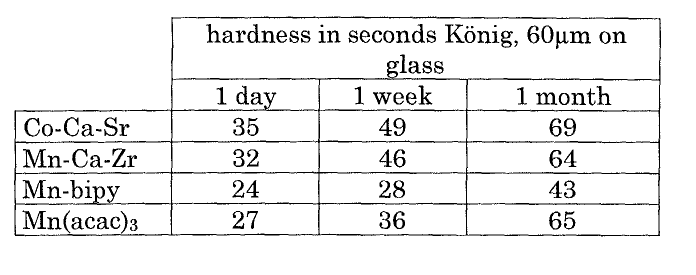

### Example 3

In this example the drying activity was measured in a clear varnish based on Uralac AD 152 WS-40 from DSM Resins (a medium oil alkyd resin based on soy-bean oil, 47% oil).

A cobalt based combination drier: Co-Ca-Sr (Nuodex Combi BSR), a manganese based combination drier: Mn-Ca-Zr (Nuodex 99/366), a manganese-bipyridyl drier (Nuodex FS 530) and Mn(acac)3 solved in Hacac are tested on drying and hardness.

| Drier | % active drier in the combination | % active drier on solid resin | % Meko on total |
|---|---|---|---|
| Co-Ca-Sr | 1.11% Co | 0.08 | 0.3 |
| Mn-Ca-Zr | 1.2% Mn | 0.1 | 0.3 |
| Mn-bipy | 1.0% Mn | 0.1 | 0.3 |
| Mn(Acac)₃ | 1.55% Mn | 0.1 | none |
| Mn(Acac)₃ + bipyridyl | 1.55% Mn | 0.1 | none |

| | drying by hand on glass 60µm | | drying time Braive recorder, 76µm at 23°C and 50% relative humidity | | |
|---|---|---|---|---|---|
| drier | s.d | t.d | stage a | stage b | stage c |
| Co-Ca-Sr | 1.45 | 2.15 | 1.15 | 2.15 | 6.45 |
| Mn-Ca-Zr | > 6.00 | - | 1.30 | 12.30 | 16.00 |
| Mn-bipy | 3.00 | > 6.00 | 1.30 | 6.30 | 10.00 |
| Mn(acac)₃ | 2.00 | 2.30 | 1.15 | 2.15 | 4.00 |
| Mn(acac)₃ + bipyridyl | 2.30 | 3.00 | 1.15 | 3.00 | 5.00 |

### Example 4

In this example the skin formation during storage was noted in a commercial wood preservative based on a long-oil alkyd (72% oil lenght, tall oil, 6% pigments) supplied by Dyrup, Denmark.

A cobalt based combination drier: Co-Ca-Sr (Nuodex Combi BSR), a manganese based combination drier: Mn-Ca-Zr (Nuodex 99/366), a manganese-bipyridyl drier (Nuodex FS 530) and Mn(acac)3 solved in Hacac are the driers. As anti-skinning agent some paints contain 0.3% Exkin 2 (methylethylketoxim supplied by SASOL Servo).

Test on skin of 100 g paint in a closed glass bottle of 300 ml during storage.

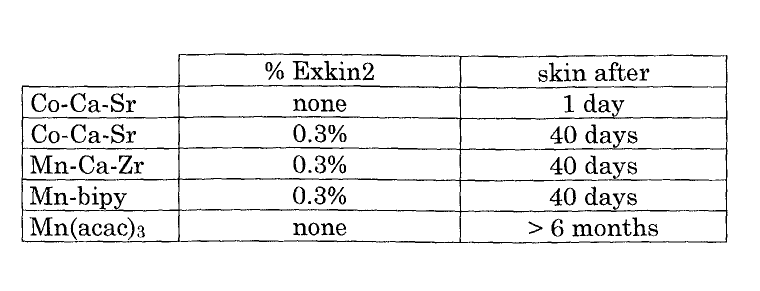

### Example 5

In this example the drying activity was measured in a clear varnish based on SETAL 270 WS 50 from AKZO Nobel (a long-oil alkyd resin based on soy-bean oil, 65% oil).

A cobalt based combination drier: Co-Ca-Sr (Nuodex Combi BSR), a manganese based combination drier: Mn-Ca-Zr (Nuodex 99/366), a manganese-bipyridyl drier (Nuodex FS 530), Mn(acac)3 solved in Hacac and Mn(acac)3 + bipyridyl are tested on drying and hardness.

| Drier | % active drier on solid resin | % Meko on total |
|---|---|---|
| Co-Ca-Sr | 0.075% Co | none |
| Mn-Ca-Zr | 0.1% Mn | none |
| Mn-bipy | 0.1% Mn | none |
| Mn(acac)3 | 0.1% Mn | none |
| Mn(acac)3 +bipyridyl | 0.1% Mn | none |

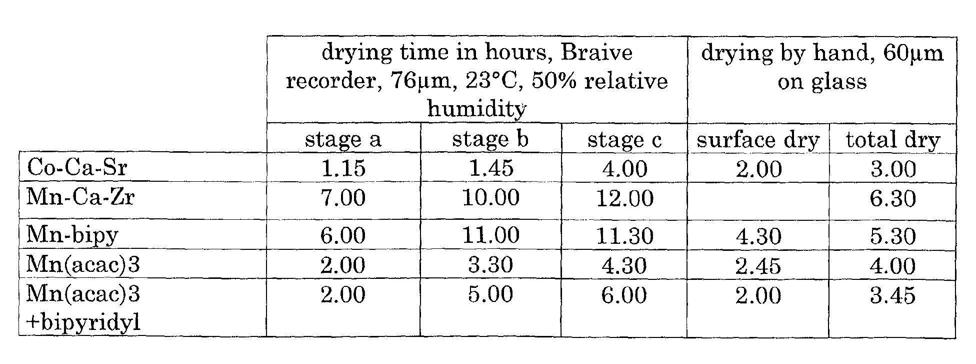

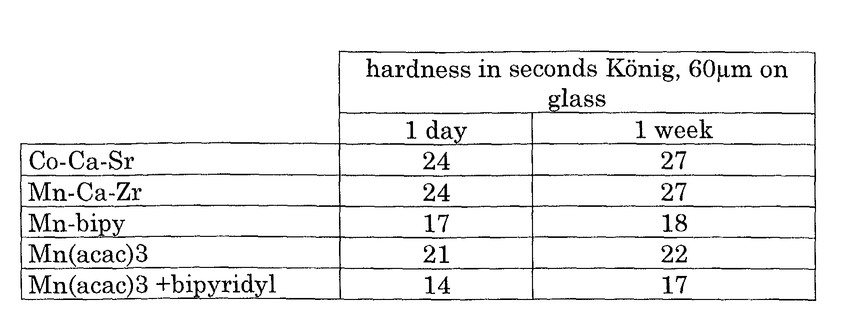

### Example 6

In this example the drying activity was measured in a clear varnish based on SETAL 270 WS 50 from AKZO Nobel, a long oil oil alkyd resin based on soya-bean oil (65% oil).

A cobalt based combination drier: Co-Ca-Sr (Nuodex Combi BSR), a manganese based combination drier: Mn-Ca-Zr (Nuodex 99/366), a manganese-bipyridyl drier (Nuodex FS 530), Mn(acac)3 solved in Hacac and Mn(acac)3 + bipyridyl are tested.

Test on skin of 150 g paint in a closed glass bottle of 300 ml during storage.

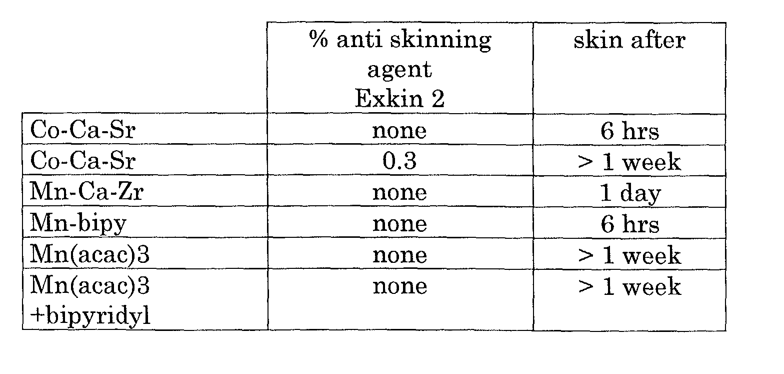

## Claims

1. A drier for an oxidatively air-drying alkyd based coating having the formula (I)
[(Mⁿ⁺)(B₁-)ₚ(B₂-)_{q}(B₃-)ᵣ(L)ₓ](A-)_{y} (I)
wherein
M represents a metal cation chosen from the group of V, Mn, Fe, Ni, Cu and Ce;
n is any integer number between 1-4;
p is an integer number between 1-3;
q is an integer number between 0-3;
r is an integer number between 0-3;
x is an integer number between 0-3;
y is an integer number between 0-3;
A is an anion chosen from the group of perchlorates, nitrates, sulfates, phosphates, borates, oxalates, naphthenates and carboxylates;
L is a chelating diamine; and
B₁, B₂ and B₃ are the same or different and chosen from the group of mononegative chelating ligands having the formula (II) 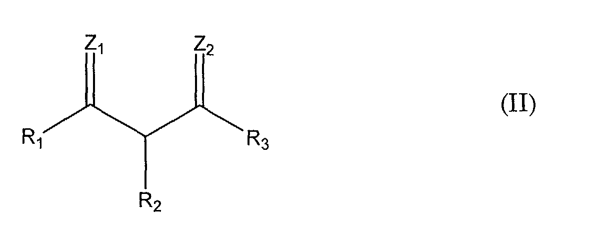 wherein
R₁ and R₂ and R₃ are the same or different and chosen from the group of H, a C₁-C₄ linear or branched aliphatic alkyl group, a nitro group, a halogen, CX₃ wherein X is a halogen, or an aromatic ring optionally containing one or more heteroatoms and optionally containing one or more substituents, wherein R₁ and R₂ and/or R₂ and R₃ or both may be connected to form an aliphatic or aromatic carbon ring of C₅ or C₆; and
Z₁ and Z₂ are either both oxygen or substituted nitrogen, or a combination thereof.

2. A drier according to claim 1, wherein M is manganese or iron.

3. A drier according to claim 2, wherein n is 3.

4. A drier according to any of the preceding claims, wherein R₂ = H and R₁ and R₃ each are independently chosen from alkyl or aryl.

5. A drier according to any of the preceding claims, wherein Z₁ and Z₂ each are independently either oxygen or substituted nitrogen, preferably arylimine.

6. A drier according to any of the preceding claims, wherein q and r are 0.

7. A drier according to claim 6, wherein B₁ is dibenzoylmethane or 2,4-pentanedionate.

8. A drier according to any of the preceding claims, wherein A is 2-ethyl hexanoate.

9. A drier according to any of the preceding claims, wherein x is 1, 2, or 3, and L is chosen from the group of bipyridine, phenantroline, 2-aminomethylpyridine, ethylenediamine, tetramethylethylenediamine, diaminopropane, 1,2-diaminocyclohexane, and combinations thereof.

10. An oxidatively air-drying alkyd based coating composition comprising a drier according to any of the preceding claims.

11. A coating composition according to claim 10, wherein the drier is present in an amount of between 0.01 and 0.1 wt.%, based on the weight of the composition.

12. A coating composition according to claim 10 or 11, further comprising a resin, a pigment, and a solvent.

13. A coating obtainable by applying a coating composition according to any of the claims 10-12 and allowing the coating composition to dry.

14. Use of a drier according to any of the claims 1-9 for replacing a cobalt based drier in an oxidatively air-drying alkyd based coating composition.

15. Use of a drier according to any of the claims 1-9 as anti-skinning agent in an oxidatively air-drying alkyd based coating composition.
